# EUROPÄISCHE PATENTSCHRIFT

(11) **EP 3 818 804 B1**
(45) Veröffentlichungstag und Bekanntmachung des Hinweises auf die Patenterteilung: **28.06.2023**
(21) Anmeldenummer: 20401055.7
(22) Anmeldetag: 02.11.2020
(51) Int. Cl.: A01C 7/04, A01C 7/08, A01C 15/00

(54) **VERSORGUNGSEINRICHTUNG FÜR EINE KORNVEREINZELUNGSVORRICHTUNG**
SUPPLY DEVICE FOR A GRAIN SEPARATING DEVICE
DISPOSITIF D'ALIMENTATION POUR UN DISPOSITIF DE SÉPARATION DES GRAINS

(30) Priorität: 08.11.2019 DE 102019130225
(43) Veröffentlichungstag der Anmeldung: 12.05.2021
(73) Patentinhaber: Amazonen-Werke H. Dreyer SE & Co. KG, 49205 Hasbergen (DE)
(72) Erfinder: Wien, Thomas, 28816 Stuhr (DE); Flucke, Jan, 27798 Hude (DE); Lübben, Jan-Eike, 26188 Edewecht (DE)

(56) Entgegenhaltungen:
- US-A1- 2003 111 001
- US-A1- 2014 165 891
- US-A1- 2015 296 702
- US-A1- 2016 143 212

## Beschreibung

Die Erfindung betrifft eine Versorgungseinrichtung mit einer Kornvereinzelungsvorrichtung gemäß dem Oberbegriff des Patentanspruches 1.

Eine derartige Versorgungseinrichtung ist in US 2003/111001 A1 und US 2016/143212 A1 offenbart.

Eine weitere Versorgungseinrichtung für eine Kornvereinzelungsvorrichtung ist in der Praxis bekannt geworden. Diese Versorgungseinrichtung für eine Kornvereinzelungsvorrichtung einer landwirtschaftlichen Sämaschine leitet einer Vereinzelungsvorrichtung mit einem Saatgutvorratsraum das zu vereinzelnende Gut von einem Sammelbehälter der Versorgungseinrichtung zu. Der Sammelbehälter der Versorgungseinrichtung ist mit einem eine Einfüllöffnung eines Versorgungsbehälters verschließenden Deckel ausgestattet und weist zumindest zwei Einspeiseöffnungen in dem Deckel auf. Bei der bekannt gewordenen Versorgungseinrichtung sind an den Einspeiseöffnungen jeweils als pneumatisch beaufschlagte Gutzuführungseinrichtungen angeordnet. Die US 2015/0296702 A1 offenbart ebenfalls eine solche Versorgungseinrichtung, wobei diese nur eine einzige Einspeiseöffnung aufweist.

Über derartige Versorgungseinrichtungen können die Vereinzelungsvorrichtungen einer Einzelkornsämaschine aus einem entfernt zu der Vereinzelungsvorrichtung liegenden Vorratsbehälter beschickt werden. Dies ist vor allem bei relativ grobkörnigen Saatkörnern von Vorteil. Jedoch bei dem Ausbringen von Rüben oder anderen Feinsämereien ist dies nicht immer erforderlich.

Eine Versorgungseinrichtung mit zwei Einspeiseöffnungen an denen pneumatisch beaufschlagte Speiseleitungen angeordnet sind ist in US 2014/0165891 A1 offenbart.

Der Erfindung liegt die Aufgabe zugrunde, eine Versorgungseinrichtung zu schaffen, an der in flexibler Weise an den Einspeiseöffnungen des Sammelbehälter verschiedenartig ausgestaltete anzuordnende Nachspeiseeinrichtungen angeschlossen werden können.

Diese Aufgabe der erfindungsgemäß durch eine Versorgungseinrichtung mit den Merkmalen des Anspruchs 1 gelöst. Es ist vorgesehen, dass an zumindest einer der Einspeiseöffnungen in unmittelbarer Nähe der Einspeiseöffnung des Sammelbehälters zumindest ein Vorratsbehälter mit Schwerkraftförderung anzuordnen ist.

Infolge dieser Maßnahme kann an der jeweiligen Einspeiseöffnung des Sammelbehälters die geeignete Nachspeiseeinrichtungen, auch ein Vorratsbehälter mit ausschließlicher Schwerkraftförderung angeordnet werden. Dieses macht das erfindungsgemäße System sehr flexibel. Es ist vorgesehen, dass zusätzlich zu der an der einen Einspeiseöffnung angeordneten pneumatischen Nachfülleinrichtung an der anderen Einspeiseöffnung des Sammelbehälters ein Vorratsbehälter mit Schwerkraftförderung angeordnet ist. Somit lassen sich also an den Sammelbehälter gleichzeitig eine pneumatische Nachfülleinrichtung und ein Vorratsbehälter mit einer Schwerkraftförderung anordnen.

Somit können also an dem Sammelbehälter zwei unterschiedliche Saatgutnachfülleinrichtungen angeordnet werden. Unterhalb der Zuleitungen in dem Sammelbehälter kann in dem Sammelbehälter eine Trennwand angeordnet sein.

Durch die Anordnung des Vorratsbehälters mit Schwerkraftförderung können der Versorgungseinheit dezentral bestimmte Menge an auszubringende Saatgut oder anderer Materialien, wie Dünger oder Fließmittel der jeweiligen Vereinzelung zugeführt werden. Dies ist insbesondere bei Feinsämereien mit geringem Aussaatmenge vorteilhaft. Dabei kann der Behälter direkt über ein Dosierorgans verfügen, um das entsprechende Gut in dosierter Weise an die Vereinzelungseinheit abgeben zu können.

Erfindungsgemäß ist die jeweilige Schnittstelle der Einspeiseöffnungen einheitlich ausgebildet so dass sowohl die pneumatisch zu beaufschlagende Speiseleitung wie auch der Vorratsbehälter mit Schwerkraftförderung dort anzuordnen sind. Somit kann also eine dezentrale Zufuhr von körnigem Material so in das geschlossene Saatgut Nachführung System zu der Vereinzelungseinheit angeordnet werden. Dieser zusätzliche Vorratsbehälter mit Schwerkraftförderung kann außerdem dazu genutzt werden, um das zentral pneumatisch zugeführte Saatgut mit weiteren auszubringenden Gütern, wie Weizen, Flussmittel, weiterem Saatgut vorteilhaft zu vermischen.

In einer Weiterbildung der Erfindung ist vorgesehen, dass an zumindest einer weiteren Einspeiseöffnungen des Sammelbehälters zumindest eine pneumatisch beaufschlagte Speiseleitung anzuordnen ist, dass die zumindest eine pneumatisch beaufschlagte Speiseleitung mit zumindest einem entfernt zu dem Sammelbehälter angeordneten Vorratsbehälter verbunden ist.

In einer anderen Weiterbildung der Erfindung ist vorgesehen, dass an zumindest einer weiteren Einspeiseöffnung in unmittelbarer Nähe der Einspeiseöffnung des Sammelbehälters zumindest ein weiterer Vorratsbehälter mit Schwerkraftförderung in unmittelbarer Nähe des zumindest einem anderen Vorratsbehälters mit Schwerkraftförderung anzuordnen ist.

Eine nicht erfindungsgemäße Ausführungsform wird dadurch erreicht, dass an in den Einspeiseöffnungen des Sammelbehälters anstelle der Vorratsbehälter mit Schwerkraftförderung ausschließlich pneumatisch beaufschlagte Speiseleitungen anzuordnen ist, dass die pneumatisch beaufschlagten Speiseleitungen mit entfernt zu dem Sammelbehälter angeordneten Vorratsbehältern verbunden ist.

Um in einfacher Weise die Einspeiseluftströmung aus dem System heraus zu leiten, ist vorgesehen, dass der Sammelbehälter der Versorgungseinrichtung zumindest einen Abscheidebereich mit zumindest einer Abscheideeinrichtung aufweist, dass in die zumindest eine Abscheideeinrichtung die mit körnigem Gut beladene Einspeiseluftströmung einleitbar ist, dass in dem zumindest einem Abscheidebereich durch die Abscheideeinrichtung das körnige Material aus der Einspeiseluftströmung abgeschieden wird.

Um das über jede Einspeiseöffnungen in den Sammelbehälter der Versorgungseinrichtung getrennt der Vereinzelungseinheit zu führen zu können, ist vorgesehen, dass in der Versorgungseinrichtung in dem Abscheidebereich eine die Versorgungseinrichtung in zwei Abscheidungsbereiche unterteilende Trennwand angeordnet ist, dass jedem Abscheidungsbereich zumindest eine eigene Einlassöffnung zugeordnet ist. Somit lassen sich also zwei getrennte bzw. separate Saatgutkanäle von der jeweiligen Einspeiseöffnungen zu der Vereinzelungseinheit schaffen.

Um das sich in dem Behälter mit Schwerkraftförderung befindliche auszubringende Gut in einstellbaren Mengen der Vereinzelungseinheit oder ein anderen sich in der Sammelbehälter befindlichen Gut gezielt und in einstellbaren Mengen zuzuführen, ist vorgesehen, dass dem Vorratsbehälter mit Schwerkraftförderung zumindest ein vorzugsweise regelbares Dosierorgan zugordnet ist.

Die Anschlußstutzen zwischen den Einspeiseöffnungen und dem pneumatischen Speiseleitungen sowie den Vorratsbehältern sind gleich ausgebildet.

Weitere Einzelheiten der Erfindung sind der Beispielsbeschreibung und den Zeichnungen zu entnehmen. Die Zeichnungen zeigen
- Fig.1: ein Einzelkornsäaggregat mit einer erfindungsgemäß ausgestalteten Versorgungseinheit mit pneumatischer Zuführungsleitung in perspektivischer Darstellung,
- Fig.2: die an dem Sammelbehälter der Versorgungseinrichtung angeordnete pneumatische Zuführungsleitung in Teilansicht, vergrößerter und perspektivischer Darstellung
- Fig.3: ein Einzelkornsäaggregat mit einer erfindungsgemäß ausgestalteten Versorgungseinheit mit einem Vorratsbehälter mit Schwerkraftförderung und Dosiereinheit in perspektivischer Darstellung,
- Fig.4: der an dem Sammelbehälter der Versorgungseinrichtung angeordnete Vorratsbehälter mit Schwerkraftförderung und Dosiereinheiten in Teilansicht, vergrößerter und perspektivischer Darstellung,
- Fig.5: ein Einzelkornsäaggregat mit einer erfindungsgemäß ausgestalteten Versorgungseinheit pneumatischer Zuführungsleitung und mit einem Vorratsbehälter mit Schwerkraftförderung und Dosiereinheiten in perspektivischer Darstellung,
- Fig.6: der an dem Sammelbehälter der Versorgungseinrichtung angeordnete pneumatische Zuführungsleitung und der Vorratsbehälter mit Schwerkraftförderung und Dosiereinheiten in Teilansicht, vergrößerter und perspektivischer Darstellung,
- Fig.7: ein Einzelkornsäaggregat mit einer erfindungsgemäß ausgestalteten Versorgungseinheit mit zwei Vorratsbehältern jeweils mit Schwerkraftförderung und Dosiereinheiten in perspektivischer Darstellung,
- Fig.8: die an dem Sammelbehälter der Versorgungseinrichtung angeordnete Versorgungseinheit mit zwei Vorratsbehältern jeweils mit Schwerkraftförderung und Dosiereinheiten in Teilansicht, vergrößerter und perspektivischer Darstellung,
- Fig.9: die Versorgungseinrichtung mit einer Abscheideeinrichtung, wobei der Deckel des Sammelbehälter aufgeklappt ist, in perspektivischer Darstellung,
- Fig.10: die Versorgungseinheit nach Fig.5 und 6 im Schnitt und
- Fig.11: die Anordnung von mehreren Versorgungseinrichtungen entsprechend den Fig.5 und 6 nebeneinander in perspektivischer Darstellung.

Die Versorgungseinrichtung 1 für eine Kornvereinzelungsvorrichtung 2 einer landwirtschaftlichen Sämaschine ist ein Sammelbehälter 3 zugeordnet, über dem einen Saatgutvorratsraum 4 einer Vereinzelungsvorrichtung der Kornvereinzelungsvorrichtung 2 das zu vereinzelnende Gut zugeleitet wird. Der Sammelbehälter 3 der Versorgungseinrichtung 1 eine Einfüllöffnung 5 auf, der durch einen aufklappbaren Deckel 6 zu verschließen ist. In dem Deckel 6 des Ausführungsbeispieles sind zwei Einspeiseöffnungen 7 und 8 angeordnet. An den Einspeiseöffnungen 8 sind jeweils Gutzuführungseinrichtungen 9 und 10 anzuordnen. Den Einspeiseöffnungen 8 sind jeweils maschinenseitige Anschlußstutzenelemente 9.1 von Anschlußstutzen 9 zugeordnet. An den Anschlußstutzenelemente 9.1 der Anschlußstutzen 9 sind befüllseitige Anschlußstutzenelemente 9.2 der Anschlußstutzen 9 anzuordnen.

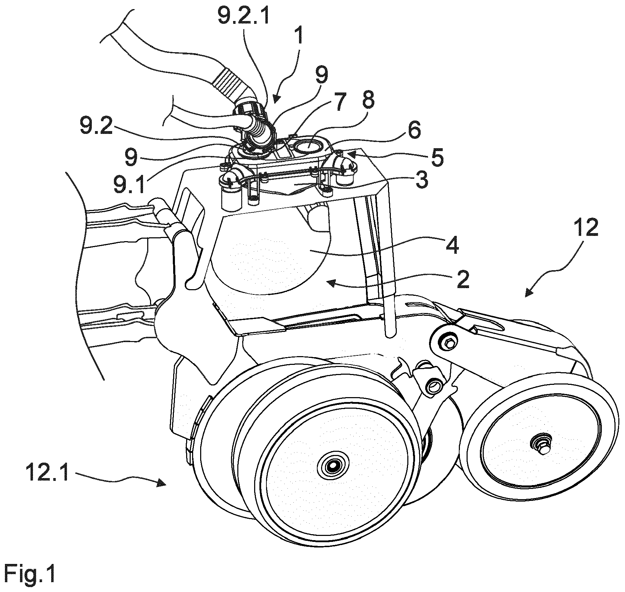

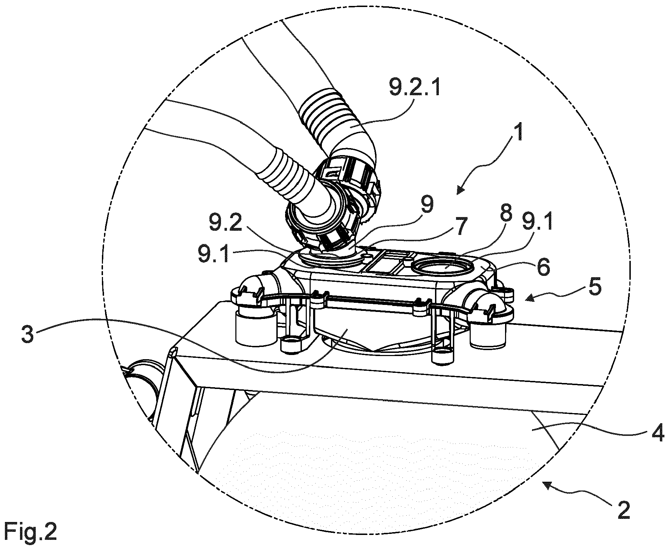

Entsprechend den Fig.1 und 2 ist an dem vorderen Anschlußstutzenelement 9.1 des Anschlußstutzens 9 eine pneumatische Speiseleitung 9.2.1 mit dem befüllseitigen Anschlußstutzenelement 9.2 an der Versorgungseinrichtung 1 angeordnet.

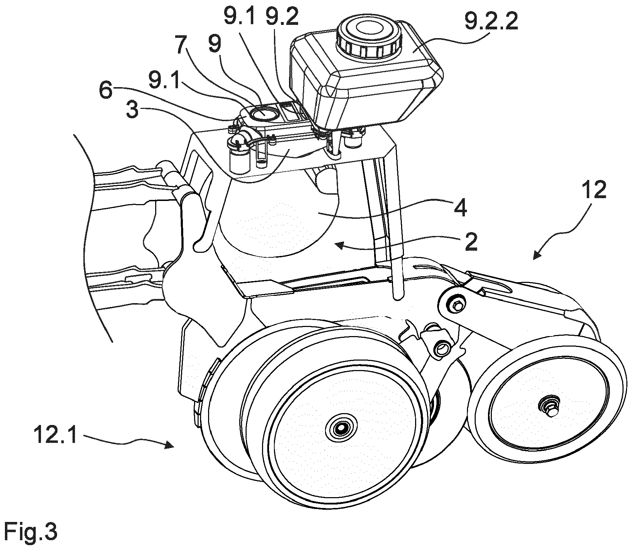

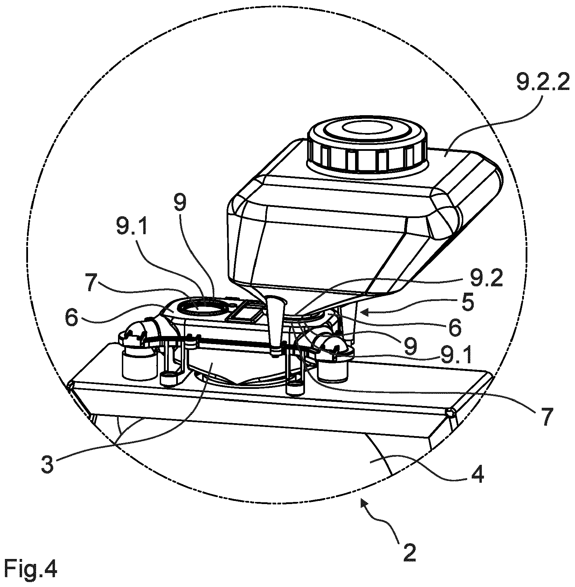

Entsprechend den Fig.3 und 4 ist an dem hinteren Anschlußstutzenelement 9.1 des Anschlußstutzens 9 ein Vorratsbehälter mit Schwerkraftförderung 9.2.2 mit dem befüllseitigen Anschlußstutzenelement 9.2 an der Versorgungseinrichtung 1 angeordnet.

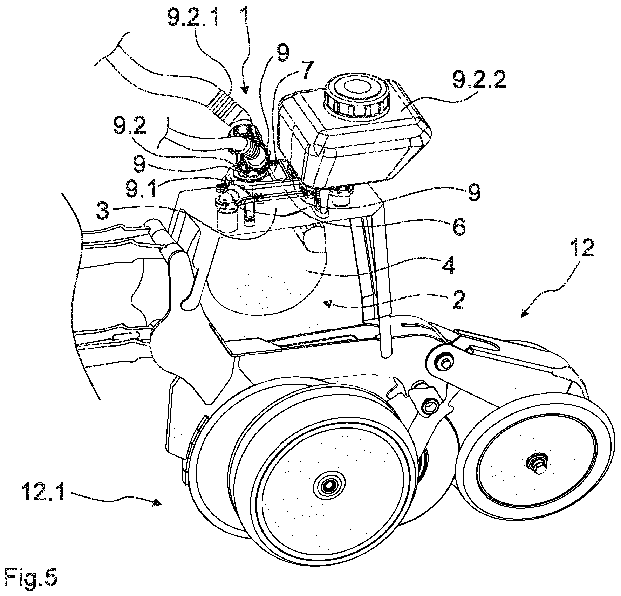

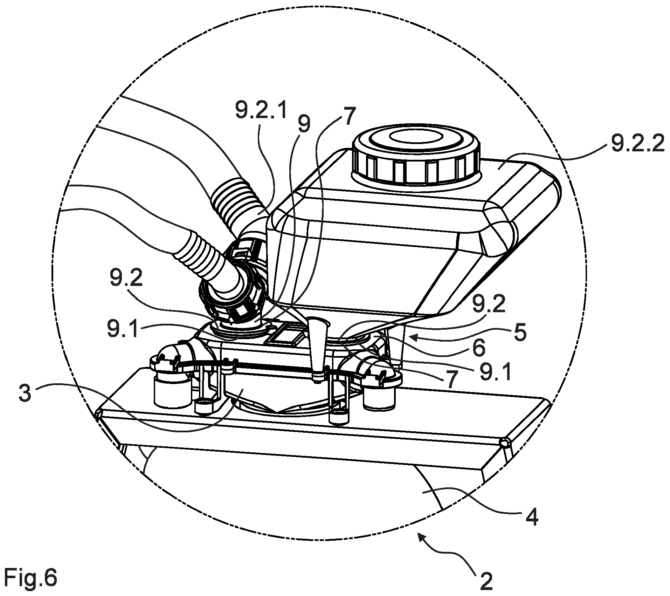

Entsprechend den Fig.5 und 6 ist an dem vorderen Anschlußstutzenelement 9.1 des Anschlußstutzens 9 eine pneumatische Speiseleitung 9.2.1 mit dem befüllseitigen Anschlußstutzenelement 9.2 an der Versorgungseinrichtung 1 angeordnet, während an dem hinteren Anschlußstutzenelement 9.1 des Anschlußstutzens 9 ein Vorratsbehälter mit Schwerkraftförderung 9.2.2 mit dem befüllseitigen Anschlußstutzenelement 9.2 an der Versorgungseinrichtung 1 angeordnet ist.

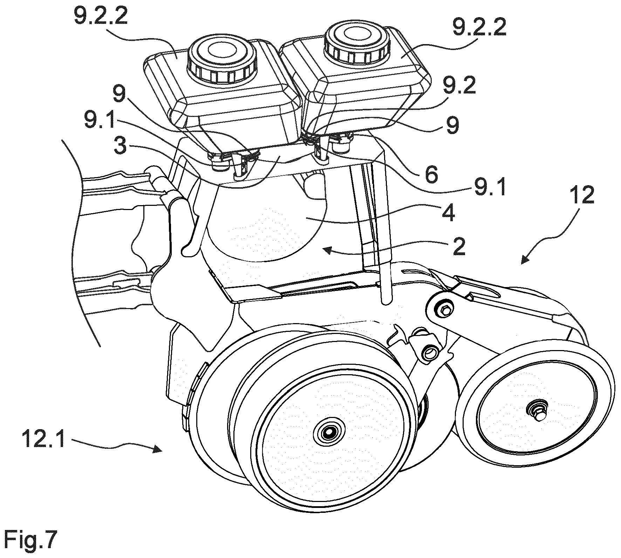

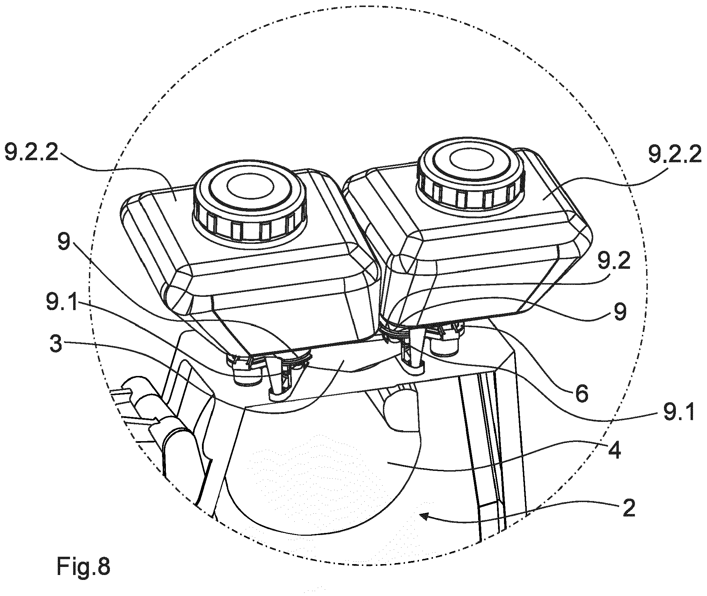

Entsprechend den Fig.7 und 8 sind sowohl an dem vorderen wie auch an dem hinteren Anschlußstutzenelement 9.1 des Anschlußstutzens 9 jeweils ein Vorratsbehälter mit Schwerkraftförderung 9.2.2 mit dem befüllseitigen Anschlußstutzenelement 9.2 an der Versorgungseinrichtung 1 angeordnet.

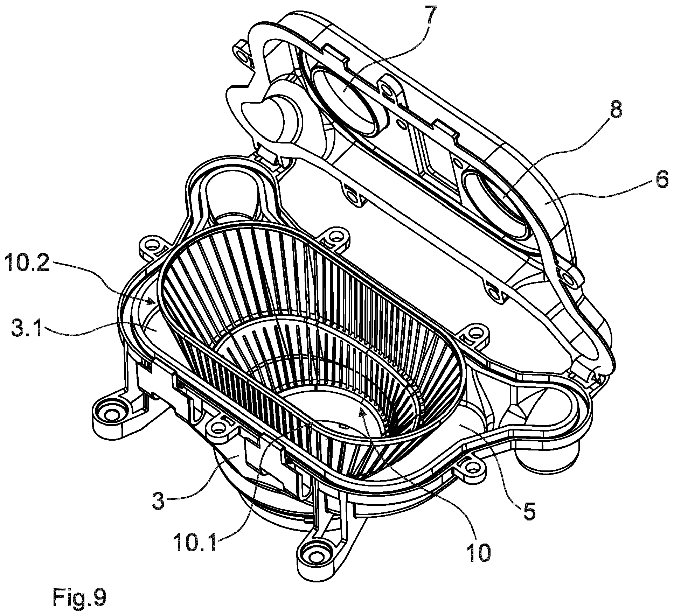

In der Darstellung gemäß der Fig.9 ist der Aufbau des Sammelbehälters 3 gezeigt. Der Sammelbehälters 3 der Versorgungseinrichtung 1 weist eine Einfüllöffnung 5 auf, die durch den aufklappbaren Deckel 6 zu verschließen ist. In dem Deckel 6 sind die Einspeiseöffnungen 7 und 8 des Ausführungsbeispieles angeordnet.

In dem Inneren 3.1 des Sammelbehälter 3 der Versorgungseinrichtung 1 ist zumindest ein Abscheidebereich 10 vorgesehen. Der Abscheidebereich 10 weist zumindest eine Abscheideeinrichtung 10.1 auf. In die zumindest eine Abscheideeinrichtung 10.1 ist die mit körnigem Gut beladene Einspeiseluftströmung einleitbar. In dem Abscheidebereich 10 ist durch die Abscheideeinrichtung 10.1 das körnige Material aus der Einspeiseluftströmung abzuscheiden.

Die pneumatische Kornvereinzelungseinrichtung 2 vereinzelt die Körner des von dem Versorgungsaggregat 10 bereitgestellten körnigen Gutes. Hierzu verwendet die pneumatische Kornvereinzelungseinrichtung 2 eine mittels der über eine nicht dargestellte Versorgungsluftleitung von dem nicht dargestellten Gebläse bereit gestellte Versorgungsluftströmung erzeugte Druckdifferenz.

Die vereinzelten Körner werden dann einem ein Säschar 12.1 einer Saatgutablagevorrichtung 12 zugeleitet, welches die vereinzelten Körner auf eine landwirtschaftliche Nutzfläche ablegt.

Die pneumatische Kornvereinzelungseinrichtung 2 und die Saatgutablagevorrichtung 12 mit dem Säschar 12.1 sind an einer nicht dargestellten Trägerstruktur angeordnet und befestigt. Die Trägerstruktur ist über ein Parallelogrammgestänge mit einem Querbalken einer Rahmenstruktur der Sämaschine verbunden, wobei der Querbalken sich quer zur Fahrtrichtung der Sämaschine erstreckt. An dem Querbalken sind mehrere Säaggregate angeordnet, wobei jedes Säaggregat ein Versorgungseinrichtung 1, eine Kornvereinzelungseinrichtung 2 und ein Säschar 12.1 aufweist.

In dem Abscheidebereich 10 ist eine einen Kornsammelkörper 10.2 umfassende Abscheideeinrichtung 10.1 zum Abscheiden des körnigen Gutes aus der Einspeiseluftströmung angeordnet. Über eine in dem Aggregatsgehäuse angeordnete Einleiteinrichtung 9.2.1 ist die Einspeiseluftströmung nach dem Abscheiden des körnigen Gutes in die Versorgungsluftströmung für die Kornvereinzelungseinrichtung 2 einleitbar. Die Einleiteinrichtung 9.2.1 umfasst eine nicht dargestellte offene Düsenkonstruktion, über welche die Einspeiseluftströmung nach dem Abscheiden des körnigen Gutes angesaugt wird.

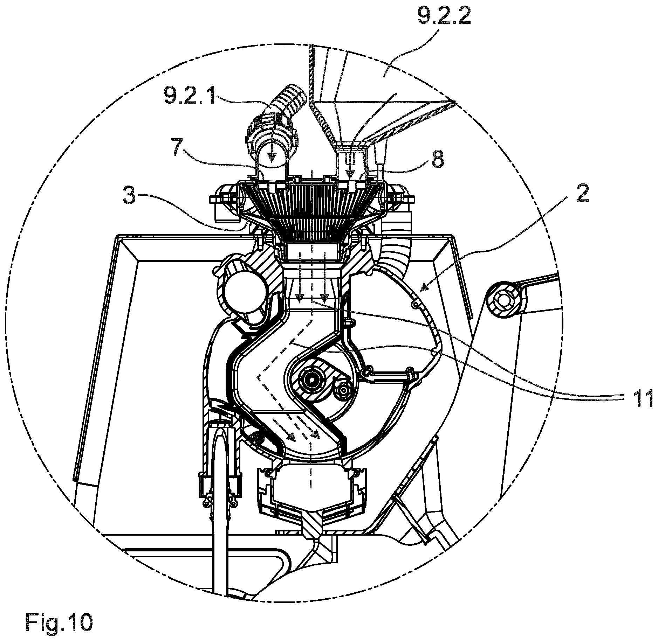

Bei der Abwandlung gemäß dem Ausführungsbeispiel nach der Fig.10 ist innerhalb der Abscheideeinrichtung 10.1 des Abscheidebereiches 10 und dem Saatgutvorratsraum 4 der Vereinzelungsvorrichtung der Kornvereinzelungsvorrichtung 2 ist zumindest eine Trennwand 11 angeordnet. Hierdurch lässt sich über jede Einspeiseöffnung 7 und das in den Sammelbehälter der Versorgungseinrichtung getrennt eingeleitete zu vereinzelnde und zu verteilende Gut der Vereinzelungseinheit zu führen getrennt zuführen. Somit sind in der Versorgungseinrichtung in dem Abscheidebereich eine die Versorgungseinrichtung in zwei Abscheidungsbereiche vorhanden, so dass jedem Abscheidungsbereich zumindest eine eigene Einlassöffnung zugeordnet ist. Somit lassen sich also zwei getrennte bzw. separate Saatgutkanäle von der jeweiligen Einspeiseöffnungen zu der Vereinzelungseinheit schaffen.

In nicht dargestellter Weise sind jedem Behälter mit Schwerkraftförderung, um das sich dort befindliche auszubringende Gut in einstellbaren Mengen der Vereinzelungseinheit oder einem anderen sich in einem Sammelbehälter befindlichen Gut gezielt und in einstellbaren Mengen zuzuführen, zumindest ein vorzugsweise regelbares Dosierorgan zugordnet.

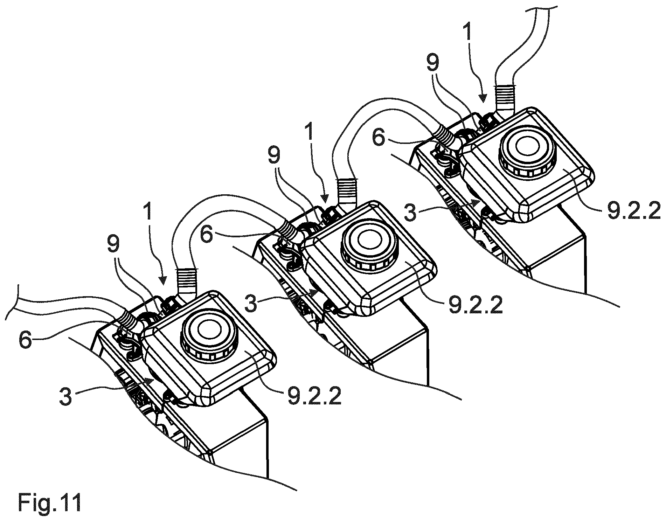

In der Fig. 11 ist lediglich beispielhaft dargestellt, dass mehrere nebeneinander beabstandet zu einander angeordnete Versorungseinrichtungen 1 mit zugeordneten Kornvereinzelungseinrichtung 2 eine allgemeine Einzelkornsämaschine größerer Arbeitsbreite bilden können.

Die Funktionsweise ist folgende:
Wie vorbeschrieben ist so eine Versorgungseinrichtung 1 geschaffen worden, der in flexibler Weise verschiedenartig ausgestaltete an den Einspeiseöffnungen 7, 8 des Sammelbehälter 3 anzuordnende Nachspeiseeinrichtungen 9.2.1, 9.2.2 angeschlossen werden können. Dies wird zunächst dadurch erreicht, indem zumindest einer der Einspeiseöffnungen 8 in unmittelbarer Nähe der Einspeiseöffnung 8 des Sammelbehälters 3 zumindest ein Vorratsbehälter 9.2.2 mit Schwerkraftförderung anzuordnen ist. Hierdurch kann so an der jeweiligen Einspeiseöffnung 7, 8 des Sammelbehälter 3 die jeweils geeignete Nachspeiseeinrichtungen 9.2.1, 9.2.2, sowohl eine pneumatisch beaufschlagte Nachspeiseleitung 9.2.1 wie auch ein Vorratsbehälter 9.2.2 mit Schwerkraftförderung angeordnet werden. Dieses macht das System sehr flexibel. So kann beispielsweise zusätzlich zu der an der einen Einspeiseöffnung 7 angeordneten pneumatischen Nachfülleinrichtung 9.2.1 an der anderen Einspeiseöffnung 8 des Sammelbehälters 3 ein Vorratsbehälter 9.2.2 mit Schwerkraftförderung angeordnet werden. Somit lassen sich also an den Sammelbehälter 3 gleichzeitig eine pneumatische Nachfülleinrichtung 9.2.1 und Vorratsbehältern 9.2.2 mit einer Schwerkraftförderung anordnen.

Wie in der Fig.10 gezeigt können also an dem Sammelbehälter 3 zwei unterschiedliche Saatgutnachfülleinrichtungen 9.2.1, 9.2.2 angeordnet werden. Unterhalb der Zuleitungen in dem Sammelbehälter 3 kann in dem Sammelbehälter 3 eine Trennwand 11 angeordnet sein.

Durch die Anordnung des Vorratsbehälters mit Schwerkraftförderung, wie in den Fig.3, 4, 5, 6, 7, 8 und 11 können der Versorgungseinheit 1 dezentral bestimmte Menge an auszubringende Saatgut oder anderer Materialien, wie bereits oder Fließmittel der jeweiligen Vereinzelung zugeführt werden. Dies ist insbesondere bei Feinsämereien mit geringem Aussaatmenge vorteilhaft. Dabei kann der Behälter 9.2.2 direkt über ein Dosierorgans verfügen, um das entsprechende Gut dosiert an die Vereinzelungseinheit 2 abgeben zu können.

Wie vor beschrieben, ist die jeweilige Schnittstelle der Einspeiseöffnungen 7, 8 einheitlich ausgebildet, so dass sowohl der pneumatische beaufschlagte Schlauch 9.2.1 wie auch der Vorratsbehälter 9.2.2 mit Schwerkraftförderung dort anzuordnen sind. Somit kann also eine dezentrale Zufuhr von körnigem Material so in das geschlossene Saatgutnachführungssystem zu der Vereinzelungseinheit 1 angeordnet werden. Dieser zusätzliche Vorratsbehälter 9.2.2 mit Schwerkraftförderung kann außerdem dazu genutzt werden, um das zentral pneumatisch zugeführte Saatgut mit weiteren auszubringenden Gütern, wie Weizen, Flussmittel, weiterem Saatgut vorteilhaft zu vermischen.

Andererseits kann zumindest einer weiteren Einspeiseöffnungen 7 des Sammelbehälters 3 zumindest eine pneumatisch beaufschlagte Speiseleitung 9.2.1 anzuordnen ist, dass die zumindest eine pneumatisch beaufschlagte Speiseleitung 9.2.1 mit zumindest einem entfernt zu dem Sammelbehälter angeordneten Vorratsbehälter verbunden ist.

Ebenfalls kann an zumindest einer weiteren Einspeiseöffnung in unmittelbarer Nähe der Einspeiseöffnung 7, 8 des Sammelbehälters 3 zumindest ein weiterer Vorratsbehälter 9.2.2 mit Schwerkraftförderung in unmittelbarer Nähe des zumindest einem anderen Vorratsbehälters 9.2.2 mit Schwerkraftförderung angeordnet werden.

Eine besonders große Flexibilität wird dadurch durch die jeweils gewünschte Anordnung an den Einspeiseöffnungen 7, 8 des Sammelbehälters 3 anstelle der Vorratsbehälter 9.2.2 mit Schwerkraftförderung ausschließlich pneumatisch beaufschlagte Speiseleitungen 9.2.1 anzuordnen, wobei pneumatisch beaufschlagte Speiseleitungen 9.2.1 mit entfernt zu dem Sammelbehälter angeordneten Vorratsbehältern verbunden sind.

## Patentansprüche

1. Versorgungseinrichtung (1) mit einer Kornvereinzelungsvorrichtung (2) einer landwirtschaftlichen Sämaschine, wobei die Kornvereinzelungsvorrichtung (2) eine Vereinzelungsvorrichtung mit einem Saatgutvorratsraum (4) aufweist, dem das zu vereinzelnende Gut von einem Sammelbehälter (3) der Versorgungseinrichtung (1) zugeleitet wird, wobei der Sammelbehälter (3) der Versorgungseinrichtung (1) zumindest zwei Einspeiseöffnungen (7, 8) aufweist, wobei an den Einspeiseöffnungen (7, 8) jeweils Gutzuführungseinrichtungen (9.2.1, 9.2.2) anzuordnen sind, wobei an zumindest einer der Einspeiseöffnungen (7, 8) in unmittelbarer Nähe der Einspeiseöffnung (7,8) des Sammelbehälters (3) zumindest ein Vorratsbehälter (9.2.2) mit Schwerkraftförderung anzuordnen ist, wobei an zumindest einer anderen Einspeiseöffnung (7, 8) eine pneumatisch Nachfülleinrichtung anzuordnen ist, **dadurch gekennzeichnet, dass** eine Schnittstelle der Einspeiseöffnungen (7, 8) einheitlich ausgebildet ist, so dass sowohl die pneumatische Nachfülleinrichtung als auch der Vorratsbehälter (9.2.2) anzuordnen sind.

2. Versorgungseinrichtung nach Anspruch 1, **dadurch gekennzeichnet, dass** die pneumatische Nachfülleinrichtung als pneumatisch beaufschlagte Speiseleitung (2.2.1) ausgeführt ist, dass die zumindest eine pneumatisch beaufschlagte Speiseleitung (2.2.1) mit zumindest einem entfernt zu dem Sammelbehälter (3) angeordneten Vorratsbehälter verbunden ist.

3. Versorgungseinrichtung nach Anspruch 1, **dadurch gekennzeichnet, dass** an zumindest einer weiteren Einspeiseöffnung (7, 8) in unmittelbarer Nähe der Einspeiseöffnung (7, 8) des Sammelbehälters (3) zumindest ein weiterer Vorratsbehälter (9.2.2) mit Schwerkraftförderung in unmittelbarer Nähe des zumindest einem anderen Vorratsbehälters (9.2.2) mit Schwerkraftförderung anzuordnen ist.

4. Versorgungseinrichtung nach zumindest einem der vorstehenden Ansprüche, **dadurch gekennzeichnet, dass** der Sammelbehälter (3) der Versorgungseinrichtung (1) zumindest einen Abscheidebereich (10) mit zumindest einer Abscheideeinrichtung (10.1) aufweist, dass in die zumindest eine Abscheideeinrichtung (10) die mit körnigem Gut beladene Einspeiseluftströmung einleitbar ist, dass in dem zumindest einem Abscheidebereich (10) durch die Abscheideeinrichtung (10.1) das körnige Material aus der Einspeiseluftströmung abgeschieden wird.

5. Versorgungseinrichtung nach Anspruch 4, **dadurch gekennzeichnet, dass** in der Versorgungseinrichtung (1) in dem Abscheidebereich (10) eine die Versorgungseinrichtung (1) in zwei Abscheidungsbereiche unterteilende Trennwand (11) angeordnet ist, dass jedem Abscheidungsbereich (10) zumindest eine eigene Einlassöffnung (7, 8) zugeordnet ist.

6. Versorgungseinrichtung nach zumindest einem der vorstehenden Ansprüche, **dadurch gekennzeichnet, dass** dem Vorratsbehälter (9.2.2) mit Schwerkraftförderung zumindest ein vorzugsweise regelbares Dosierorgan zugordnet ist.

## Claims

1. Supply device (1) comprising a grain separation apparatus (2) of an agricultural sowing machine, wherein the grain separation apparatus (2) has a separation apparatus with a seed storage space (4), to which the crop to be separated is fed from a collecting tank (3) of the supply device (1), wherein the collecting tank (3) of the supply device (1) has at least two feed openings (7, 8), wherein crop feed devices (9.2.1, 9.2.2) are respectively arranged on the feed openings (7, 8), wherein at least one storage tank (9.2.2) with drop delivery is to be arranged on at least one of the feed openings (7, 8) in the immediate vicinity of the feed opening (7, 8) of the collecting tank (3), wherein a pneumatic refilling device is to be arranged at at least one other feed opening (7, 8), **characterized in that** an interface of the feed openings (7, 8) is formed uniformly so that both the pneumatic refilling device and the storage tank (9.2.2) are to be arranged.

2. Supply device according to Claim 1, **characterized in that** the pneumatic refilling device is designed as a pneumatically loaded feed line (2.2.1), **in that** the at least one pneumatically loaded feed line (2.2.1) is connected to at least one storage tank arranged remotely from the collecting tank (3).

3. Supply device according to Claim 1, **characterized in that** at at least one further feed opening (7, 8) in the immediate vicinity of the feed opening (7, 8) of the collecting tank (3), at least one further storage tank (9.2.2) with drop delivery is to be arranged in the immediate vicinity of the at least one other storage tank (9.2.2) with drop delivery.

4. Supply device according to at least one of the preceding claims, **characterized in that** the collecting tank (3) of the supply device (1) has at least one filtering region (10) with at least one filtering device (10.1), **in that** the feed air flow loaded with granular crop can be introduced into the at least one filtering device (10), **in that** the granular material from the feed air flow is filtered out in the at least one filtering region (10) by the filtering device (10.1).

5. Supply device according to Claim 4, **characterized in that** a partition wall (11) dividing the supply device (1) into two filtering regions is arranged in the supply device (1) in the filtering region (10), **in that** at least one respective inlet opening (7, 8) is assigned to each filtering region (10).

6. Supply device according to at least one of the preceding claims, **characterized in that** at least one, preferably regulatable, metering member is assigned to the storage tank (9.2.2) with drop delivery.

## Revendications

1. Dispositif d'alimentation (1) comportant un dispositif de répartition de grains (2) d'un semoir agricole, le dispositif de répartition de grains (2) présentant un dispositif de répartition comportant un espace de stockage de semences (4), auquel le produit à répartir est amené depuis un réservoir collecteur (3) du dispositif d'alimentation (1), le réservoir collecteur (3) du dispositif d'alimentation (1) présentant au moins deux ouvertures d'introduction (7, 8), des dispositifs d'alimentation en produit (9.2.1, 9.2.2) devant être disposés respectivement sur les ouvertures d'introduction (7, 8), au moins un réservoir de stockage (9.2.2) avec transport par gravité devant être disposé au niveau d'au moins une des ouvertures d'introduction (7, 8) à proximité immédiate de l'ouverture d'introduction (7, 8) du réservoir collecteur (3), un dispositif de remplissage pneumatique devant être disposé au niveau d'au moins une autre ouverture d'introduction (7, 8), **caractérisé en ce qu**'une interface des ouvertures d'introduction (7, 8) est conçue de manière uniforme, de telle sorte que tant le dispositif de remplissage pneumatique que le réservoir de stockage (9.2.2) doivent être disposés.

2. Dispositif d'alimentation selon la revendication 1, **caractérisé en ce que** le dispositif de remplissage pneumatique est conçu en tant conduite d'alimentation (2.2.1) sous pression pneumatique, **en ce que** l'au moins une conduite d'alimentation (2.2.1) sous pression pneumatique est raccordée à au moins un réservoir de stockage disposé à distance du réservoir collecteur (3).

3. Dispositif d'alimentation selon la revendication 1, **caractérisé en ce que,** au niveau d'au moins une autre ouverture d'introduction (7, 8) à proximité immédiate de l'ouverture d'introduction (7, 8) du réservoir collecteur (3), au moins un autre réservoir de stockage (9.2.2) avec transport par gravité doit être disposé à proximité immédiate de l'au moins un autre réservoir de stockage (9.2.2) avec transport par gravité.

4. Dispositif d'alimentation selon au moins l'une quelconque des revendications précédentes, **caractérisé en ce que** le réservoir collecteur (3) du dispositif d'alimentation (1) présente au moins une zone de séparation (10) comportant au moins un dispositif de séparation (10.1), **en ce que** le courant d'air d'injection chargé de produit granulaire peut être introduit dans l'au moins un dispositif de séparation (10), **en ce que** dans l'au moins une zone de séparation (10) le matériau granulaire est séparé du courant d'air d'injection par le dispositif de séparation (10.1).

5. Dispositif d'alimentation selon la revendication 4, **caractérisé en ce qu**'une paroi de séparation (11) divisant le dispositif d'alimentation (1) en deux zones de séparation est disposée dans le dispositif d'alimentation (1) dans la zone de séparation (10), en ce qu'à chaque zone de séparation (10) est associée au moins une ouverture d'introduction (7, 8) propre.

6. Dispositif d'alimentation selon au moins l'une quelconque des revendications précédentes, **caractérisé en ce qu**'au moins un organe de dosage de préférence réglable est associé au réservoir de stockage (9.2.2) avec transport par gravité.
